(19) Europäisches Patentamt
European Patent Office
Office européen des brevets

(11) EP 3 702 426 A1

(12) EUROPEAN PATENT APPLICATION
published in accordance with Art. 153(4) EPC

(43) Date of publication:
**02.09.2020 Bulletin 2020/36**

(21) Application number: **18883320.6**

(22) Date of filing: **27.11.2018**

(51) Int Cl.:
***C09J 7/20*** *(2018.01)* ***C09J 133/08*** *(2006.01)*
***C09J 133/10*** *(2006.01)* ***G02B 5/30*** *(2006.01)*
***C08L 29/04*** *(2006.01)* ***C08K 3/08*** *(2006.01)*

(86) International application number:
**PCT/KR2018/014692**

(87) International publication number:
**WO 2019/107867 (06.06.2019 Gazette 2019/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.11.2017 KR 20170160493**

(71) Applicant: **LG Chem, Ltd.**
**Seoul 07336 (KR)**

(72) Inventors:
- **LEE, Dong Hun**
  **Daejeon 34122 (KR)**
- **HAN, Seul Ki**
  **Daejeon 34122 (KR)**
- **SON, Hyun Hee**
  **Daejeon 34122 (KR)**

(74) Representative: **Plasseraud IP**
**66, rue de la Chaussée d'Antin**
**75440 Paris Cedex 09 (FR)**

# (54) OPTICAL LAMINATE

(57) The present application relates to an optical laminate. The present application can provide an optical laminate which can have stable durability even at a high temperature, particularly an ultra-high temperature of about 100°C or higher, and that base material adhesiveness is excellent, other physical properties required for the optical laminate are also excellent, and even in the case of being disposed adjacent to the electrode, corrosion of the relevant electrode or the like is not induced.

EP 3 702 426 A1

## Description

### Technical Field

This application claims the benefit of the filing date of the Korean Patent Application No. 10-2017-0160493 filed on November 28, 2017, the disclosure of which is incorporated herein by reference in its entirety.
The present application relates to an optical laminate.

### Background Art

Various optical films such as a polarizing plate are applied to various display devices such as an LCD (liquid crystal display) or an OLED (organic light emitting diode). Such an optical film is generally attached to a display device by a pressure-sensitive adhesive.
As applications of the display device are expanded, high reliability is required for the optical film and the pressure-sensitive adhesive. For example, optical films and pressure-sensitive adhesives used in navigation or automotive displays, and the like are required to stably maintain their performance even when they are kept at a very high temperature for a long period of time.

### Disclosure

### Technical Problem

The present application relates to an optical laminate.

### Technical Solution

The optical laminate of the present application comprises an optical film and a pressure-sensitive adhesive layer formed on one side or both sides of the optical film. If necessary, a release film may be formed on the pressure-sensitive adhesive layer formed on one side or both sides of the optical film.
The type of the optical film included in the optical laminate of the present application is not particularly limited, and various types of optical films used in various display devices may be included. For example, as the optical film, a polarizing plate, a polarizer, a polarizer protective film, a retardation film, a viewing angle compensation film or a luminance enhancement film, and the like can be exemplified. In this specification, the term polarizer and polarizing plate refers to subjects that are distinguished from each other. The polarizer refers to a film, sheet or element itself exhibiting a polarization function, and the polarizing plate means an optical element including other elements together with the polarizer. Other elements that can be included in the optical element together with the polarizer can be exemplified by a polarizer protective film or a retardation layer, and the like, but is not limited thereto.
The kind of the polarizer that can be included in the optical film of the present application is not particularly limited. For example, as the polarizer, a polyvinyl alcohol polarizer can be used. The term polyvinyl alcohol polarizer may mean, for example, a resin film of polyvinyl alcohol (hereinafter, may be referred to as PVA) series containing an anisotropic absorbent material such as iodine or a dichroic dye. Such a film can be produced by incorporating an anisotropic absorbent material into a polyvinyl alcohol-based resin film and orienting it by stretching or the like. Here, an example of the polyvinyl alcohol-based resin may include polyvinyl alcohol, polyvinyl formal, polyvinyl acetal or a gummed product of ethylene-vinyl acetate copolymer, and the like. The degree of polymerization of the polyvinyl alcohol-based resin may be 100 to 5,000 or 1,400 to 4,000 or so, but is not limited thereto.
Such a polyvinyl alcohol polarizer can be produced, for example, by performing at least a dyeing process, a crosslinking process and a stretching process on a PVA-based film. In the dyeing step, the crosslinking step and the stretching step, the respective treating baths of a dyeing bath, a crosslinking bath and a stretching bath are used, where these respective treating baths can be used by a treating solution according to the respective processes.
In the dyeing process, the anisotropic absorbent material can be adsorbed and/or oriented on the PVA-based film. Such a dyeing process can be performed together with the stretching process. The dyeing can be performed by immersing the film in a solution containing an anisotropic absorbent material, for example, an iodine solution. As the iodine solution, for example, an aqueous solution or the like containing iodine, and iodine ions by an iodinated compound as a dissolution aid may be used. As the iodinate compound, for example, potassium iodide, lithium iodide, sodium iodide, zinc iodide, aluminum iodide, lead iodide, copper iodide, barium iodide, calcium iodide, tin iodide or titanium iodide, and the like may be used. The concentration of iodine and/or iodine ions in the iodine solution can be adjusted in consideration of the desired optical characteristics of the polarizer, and such an adjustment method is known. In the dyeing process, the temperature of the iodine solution is usually 20°C to 50°C or 25°C to 40°C or so, and the immersion

time is usually 10 seconds to 300 seconds or 20 seconds to 240 seconds or so, but is not limited thereto.

The crosslinking process performed during the production process of the polarizer can be performed, for example, using a crosslinking agent such as a boron compound. The order of the crosslinking process is not particularly limited, and for example, the crosslinking process may proceed with the dyeing and/or drawing process, or may proceed separately from the dyeing and/or drawing process. The crosslinking process may also be performed several times. As the boron compound, boric acid or borax, and the like may be used. The boron compound can be generally used in the form of an aqueous solution or a mixed solution of water and an organic solvent, and usually an aqueous solution of boric acid can be used. The concentration of the boric acid in the boric acid aqueous solution can be selected in an appropriate range in consideration of the degree of crosslinking of the polarizer and the resulting heat resistance, and the like. The iodinated compound such as potassium iodide as described above can also be contained in an aqueous boric acid solution or the like.

The crosslinking process can be performed by immersing the PVA-based film in an aqueous boric acid solution or the like, and in this process, the treatment temperature is usually in a range of 25°C or higher, 30°C to 85°C or 30°C to 60°C or so and the treatment time is usually in a range of 5 seconds to 800 seconds or 8 seconds to 500 seconds or so.

The stretching process is generally performed by uniaxial stretching. Such stretching process may also be performed together with the dyeing and/or crosslinking process. The stretching method is not particularly limited, and for example, a wet stretching method can be applied. In such a wet stretching method, for example, stretching after dyeing is generally performed, but stretching may be performed with crosslinking, and may also be performed several times or in multiple stages.

The iodinated compound such as potassium iodide can be contained in the treatment liquid applied to the wet stretching method, and the light blocking rate of the polarizer can be controlled through adjusting the ratio of the iodinated compound or the like in this process. In the stretching method, the treatment temperature is usually in the range of 25°C or higher, 30°C to 85°C or 50°C to 70°C or so, and the treatment time is usually in a range of 10 seconds to 800 seconds or 30 seconds to 500 seconds, without being limited thereto.

In the stretching process, the total draw ratio can be controlled in consideration of orientation characteristics of the polarizer and the like, and for example, the total draw ratio may be 3 times to 10 times, 4 times to 8 times or 5 times to 7 times or so based on the PVA-based film original length, but is not limited thereto. Here, in the case of involving stretching a swelling process or the like other than the stretching process, the total draw ratio may mean the cumulative draw ratio in consideration of the stretching in each process. Such a total draw ratio can be adjusted to an appropriate range in consideration of orientation characteristics, processability or stretching cuttability of the polarizer, and the like.

In the production process of the polarizer, in addition to the dyeing, crosslinking and stretching, the swelling process may also be performed before or during performing the above process. The contamination of the surface of the PVA-based film or an antiblocking agent can be cleaned by swelling, whereby there is also an effect capable of reducing unevenness such as dyeing deviations.

In the swelling process, water, distilled water or pure water, and the like can be usually used. The main component of the relevant treatment liquid is water, and if necessary, an iodinated compound such as potassium iodide or an additive such as a surfactant, or an alcohol, and the like can be included in a small amount in the relevant treatment liquid. In this process, the above-described light blocking rate of the polarizer can also be controlled through control of process variables.

The treatment temperature in the swelling process is usually in a range of 20°C to 45°C or 20°C to 40°C or so, but is not limited thereto. Since swelling deviations can cause dyeing deviations, process variables can be adjusted so that the occurrence of such swelling deviations is suppressed as much as possible.

If necessary, appropriate stretching can also be performed in the swelling process. The draw ratio may be in a range of 6.5 times or less, 1.2 times to 6.5 times, 2 times to 4 times, or 2 times to 3 times, based on the original length of the PVA-based film. The stretching in the swelling process can control the stretching in the stretching process performed after the swelling process to be small, and it can control so that the stretching failure of the film does not occur.

In addition, in the production process of the polarizer, metal ion treatment can be performed. This treatment is performed, for example, by immersing the PVA-based film in an aqueous solution containing a metal salt. This allows metal ions to be contained in the polarizer, and in this process, the color tone of the PVA-based polarizer can be controlled by controlling the kind or ratio of metal ions. The applicable metal ions can be exemplified by metal ions of a transition metal such as cobalt, nickel, zinc, chromium, aluminum, copper, manganese or iron, and it may be possible to control the color tone by selecting an appropriate type of these.

In the production process of the polarizer, the cleaning process may proceed after dyeing, crosslinking and stretching. This cleaning process can be performed by a solution of an iodinated compound such as potassium iodide, and in this process, the above-described light blocking rate of the polarizer can be controlled through the concentration of the iodinated compound in the solution or the treatment time of the cleaning process, and the like. Therefore, the concentration of the iodinated compound and the treatment time with the solution can also be adjusted in consideration of the light blocking rate. Then, the cleaning process may also be performed using water.

Such cleaning with water and cleaning with the iodinated compound solution may also be combined, or a solution in which a liquid alcohol such as methanol, ethanol, isopropyl alcohol, butanol or propanol is blended may also be used in the cleaning process.

After these processes, the polarizer can be produced by performing a drying process. The drying process can be performed at an appropriate temperature for an appropriate time, for example, in consideration of the moisture content and the like required for the polarizer, where such conditions are not particularly limited.

In one example, as the polarizer, a polyvinyl alcohol polarizer comprising a potassium component such as potassium ions and a zinc component such as zinc ions may be used for securing durability, particularly high temperature reliability, of the optical laminate. If the polarizer containing such components is used, it is possible to provide an optical laminate in which durability is stably maintained even under high temperature conditions, particularly ultra-high temperature conditions of 100°C or higher.

Additionally, the ratio of the potassium and zinc components can be controlled. For example, in one example, the ratio (K/Zn) of the potassium component (K) to the zinc component (Zn) contained in the polyvinyl alcohol polarizer may be in a range of 0.2 to 6. In another example, the ratio (K/Zn) may be about 0.4 or more, 0.6 or more, 0.8 or more, 1 or more, 1.5 or more, 2 or more, or 2.5 or more, and may be 5.5 or less, about 5.0 or less, about 4.5 or less, about 4.0 or less, about 3.5 or less, or about 3.0 or less. The ratio may be a ratio of the weight of the potassium component contained in the polyvinyl alcohol polarizer to the weight of the zinc component.

In addition, the ratio of the potassium component contained in the polyvinyl alcohol polarizer may be about 0.1 to 2 wt%. In another example, the ratio of the potassium component may be about 0.15 wt% or more, about 0.2 wt% or more, about 0.25 wt% or more, about 0.3 wt% or more, about 0.35 wt% or more, 0.4 wt% or more, or about 0.45 wt% or more, and may be about 1.95 wt% or less, about 1.9 wt% or less, about 1.85 wt% or less, about 1.8 wt% or less, about 1.75 wt% or less, about 1.7 wt% or less, about 1.65 wt% or less, about 1.6 wt% or less, about 1.55 wt% or less, about 1.5 wt% or less, about 1.45 wt% or less, about 1.4 wt% or less, about 1.35 wt% or less, about 1.3 wt% or less, about 1.25 wt% or less, about 1.2 wt% or less, about 1.15 wt% or less, about 1.1 wt% or less, about 1.05 wt% or less, about 1 wt% or less, about 0.95 wt% or less, about 0.9 wt% or less, or about 0.85 wt% or less, about 0.80 wt% or less, about 0.75 wt% or less, about 0.70 wt% or less, about 0.65 wt% or less, about 0.60 wt% or less, about 0.55 wt% or less, or about 0.50 wt% or less or so.

In another example, the ratio of the zinc component contained in the polyvinyl alcohol polarizer may be about 0.1 wt% to about 0.5 wt%. In another example, the ratio of the zinc component may be about 0.11 wt% or more, about 0.12 wt% or more, about 0.13 wt% or more, about 0.14 wt% or more, about 0.15 wt% or more, about 0.16 wt% or more, or about 0.17 wt% or more, and may be about 0.45 wt% or less, about 0.40 wt% or less, about 0.35 wt% or less, about 0.30 wt% or less, about 0.25 wt% or less, or about 0.20 wt% or less.

In one example, the ratio of the potassium component to the zinc component may be included so as to satisfy Equation A below.

[Equation A]

$$0.70 \leq 1/(1+Q\times d/R) \leq 0.95$$

In Equation A, Q is the ratio (K/Zn) of the molar mass (K, 39.098g/mol) of the potassium component and the molar mass (Zn, 65.39g/mol) contained in the polyvinyl alcohol polarizer, d is the thickness (μm)/60μm of the polyvinyl alcohol polarizer before stretching, R is the ratio (K/Zn) of the weight ratio (K, unit: weight%) of the potassium component and the weight ratio (Zn, unit: weight%) of the zinc component contained in the polyvinyl alcohol polarizer.

By comprising potassium and zinc components in a polarizer in the above manner, it is possible to provide a polarizer having excellent reliability at a high temperature.

The thickness of such a polarizer is not particularly limited, where the polarizer may be formed to have an appropriate thickness depending on the purpose. Typically, the thickness of the polarizer may be in a range of 5 μm to 80 μm, but is not limited thereto.

The optical laminate of the present application may comprise a pressure-sensitive adhesive layer formed on one side or both sides of the optical film. Such a pressure-sensitive adhesive layer comprises a pressure-sensitive adhesive polymer. The pressure-sensitive adhesive layer may comprise the pressure-sensitive adhesive polymer as a main component. That is, the content ratio of the pressure-sensitive adhesive polymer relative to the total weight of the pressure-sensitive adhesive layer may be 55 wt% or more, 60 wt% or more, 65 wt% or more, 70 wt% or more, 75 wt% or more, 80 wt% or more, 85 wt% or more, or 90 wt% or more. The upper limit of the ratio is not particularly limited, which may be, for example, about 98 wt% or less, or 95 wt% or less. Such a pressure-sensitive adhesive polymer may be contained in the pressure-sensitive adhesive layer in a state of being crosslinked by a crosslinking agent as described below.

The properties of the pressure-sensitive adhesive layer can be controlled in order to ensure excellent durability under high temperature conditions, particularly, ultra-high temperature conditions of 100°C or higher, and to suppress or prevent foaming phenomena or the like even when applied to an optical film having low moisture permeability.

Hereinafter, among physical properties mentioned in this specification, when the measured temperature and/or pressure affects the physical properties, the relevant physical properties means physical properties measured at room temperature and/or normal pressure, unless otherwise specified.

In the present application, the term room temperature is a natural temperature without warming or cooling, which may mean, for example, any one temperature in a range of about 10°C to 30°C, or a temperature of about 25°C or 23°C or so.

In the present application, the term normal pressure is a pressure at the time of being not particularly reduced or increased, which may be usually one atmosphere or so, such as atmospheric pressure.

In one example, the pressure-sensitive adhesive layer may exhibit a gel fraction in a predetermined range. For example, the pressure-sensitive adhesive layer may have a gel fraction of about 80 wt% or more as calculated by Equation 1 below.

[Equation 1]

$$\text{Gel fraction (\%)} = B/A \times 100$$

In Equation 1, A is the mass (unit: g) of the pressure-sensitive adhesive layer before immersing it in ethyl acetate, and B represents the dry mass (unit: g) of the insoluble fraction recovered after immersing the pressure-sensitive adhesive layer in ethyl acetate at room temperature for 24 hours. At this time, the insoluble fraction means a component which is filtered through a 200 mesh sieve, and the dry mass of the insoluble fraction means a mass measured in a state where the solvent is not substantially contained in the relevant insoluble fraction by drying the collected insoluble fraction under an appropriate condition, for example, in a state where a solvent content is about 1 wt% or less, 0.5 wt% or less, or 0.1 wt% or less. Here, the drying condition is not particularly limited as long as the ratio of the solvent contained in the insoluble fraction can be controlled within the above range, and the drying can be performed under an appropriate condition.

In another example, the gel fraction may be about 95 wt% or less, 90 wt% or less, or about 85 wt% or less.

The pressure-sensitive adhesive layer may have a storage modulus at room temperature of about 0.07 MPa or more. In another example, the storage modulus may be 0.075 MPa or more, 0.08 MPa or more, 0.085 MPa or more, or 0.09 MPa or more, and may be 0.2 MPa or less, 0.15 MPa or less, 0.12 MPa or less, about 0.115 MPa or less, about 0.11 MPa or less, or about 0.1 MPa or less.

Here, the storage modulus (G') can be obtained using a dynamic rheometer, which may be, for example, a value measured in a state of setting the measurement temperature at 23°C, setting the measurement mode to the shear mode and setting the measurement frequency to about 1 Hz or so.

The pressure-sensitive adhesive layer may have room temperature peel force of about 700 gf/25mm or more as measured on a glass substrate at a peel rate of 300mm/min and a peel angle of 90 degrees. The upper limit of the peel force is not particularly limited, and for example, the peel force may be about 2,000 gf/25 mm or less, about 1,800 gf/25 mm or less, about 1,500 gf/25 mm or less, about 1,200 gf/25 mm or less, about 1,000 gf/25 mm or less, or about 800 gf/25 mm or less.

The pressure-sensitive adhesive layer exhibiting the above characteristics can ensure excellent durability under high temperature conditions, and particularly, ultra-high temperature conditions of 100°C or higher, and can suppress or prevent foaming phenomena or the like even when applied to an optical film having low moisture permeability.

In order to form the pressure-sensitive adhesive layer having such characteristics, the monomer composition, molecular weight characteristics, degree of crosslinking, etc. of the above-mentioned pressure-sensitive adhesive polymer can be controlled.

Furthermore, in one example, one or two or more of the above-mentioned physical properties are associated with the composition of a polymer or the like to be described below, so that a pressure-sensitive adhesive layer intended in the present application may also be formed.

As the pressure-sensitive adhesive polymer, a polymer having a weight average molecular weight (Mw) of 500,000 or more can be used. In the present application, the term "weight average molecular weight" is a numerical value in terms of standard polystyrene measured by GPC (gel permeation chromatograph), which may also be simply referred to as molecular weight, unless otherwise specified. In another example, the molecular weight (Mw) may be about 600,000 or more, about 700,000 or more, about 800,000 or more, about 900,000 or more, about 1,000,000 or more, about 1,100,000 or more, about 1,200,000 or more, about 1,300,000 or more, about 1,400,000 or more, or about 1,500,000 or more, or may be about 3,000,000 or less, about 2,800,000 or less, about 2,600,000 or less, about 2,400,000

or less, about 2,200,000 or less, or about 2,000,000 or less. In the present application, unless otherwise specified, the unit of the molecular weight is "g/mol."

The pressure-sensitive adhesive polymer may be an acrylic pressure-sensitive adhesive polymer. The term acrylic adhesive polymer may mean, as one having a property capable of forming a pressure-sensitive adhesive, a polymer comprising an acrylic monomer unit as a main component. The term acrylic monomer may mean acrylic acid, methacrylic acid or a derivative of acrylic acid or methacrylic acid such as (meth)acrylic acid ester. Here, the fact that a certain component is included as a main component may also mean a case where the ratio of the relevant component is 55% or more, 60% or more, 65% or more, 70% or more, 75% or more, 80% or more, 85% or more, 90% or more, or 95% or more on the basis of weight. The upper limit of the ratio may also be 100%. In addition, the unit contained in a certain polymer means a state where a certain monomer forms a main chain and/or a side chain of the polymer through a polymerization reaction.

The pressure-sensitive adhesive polymer may comprise (1) an alkyl (meth)acrylate (hereinafter, may be referred to as first alkyl (meth)acrylate) unit having an alkyl group having 4 or more carbon atoms, (2) an alkyl (meth)acrylate (hereinafter, may be referred to as second alkyl (meth)acrylate) unit having an alkyl group having 3 or less carbon atoms, (3) an aromatic group-containing monomer unit and (4) a hydroxyl group-containing monomer unit. Such a monomer composition is associated with physical properties of a pressure-sensitive adhesive layer, which are described below, such as gel fraction and peel force, so that the pressure-sensitive adhesive layer can excellently maintain re-workability, cutting ability, lifting and foam inhibiting ability, and the like as well as represent excellent high temperature durability.

Here, as the unit (1), an alkyl (meth)acrylate unit having an alkyl group with 4 or more carbon atoms, for example, an alkyl group with 4 to 14 carbon atoms can be used in consideration of cohesive force, glass transition temperature or adhesion of the pressure-sensitive adhesive, and the like. Such an alkyl (meth)acrylate can be exemplified by n-butyl (meth)acrylate, t-butyl (meth)acrylate, sec-butyl (meth)acrylate, pentyl (meth)acrylate, 2-ethylhexyl (meth)acrylate, 2-ethylbutyl (meth)acrylate, n-octyl (meth)acrylate, isooctyl (meth)acrylate, isononyl (meth)acrylate, lauryl (meth)acrylate and tetradecyl (meth)acrylate, and the like, and one or two or more of the foregoing can be applied. Generally, n-butyl acrylate or 2-ethylhexyl acrylate, and the like are used.

The ratio of the unit (1) in the polymer is not particularly limited, but may be in a range of about 45 to 65 wt%. In another example, the ratio may be about 50 wt% or more, 55 wt% or more, or 60 wt% or more.

As the unit (2), an alkyl (meth)acrylate unit having an alkyl group with 3 or less carbon atoms, which is the second alkyl (meth)acrylated, is used. Such a unit makes it possible that the pressure-sensitive adhesive ensures good durability and reliability at a high temperature. The monomer capable of forming the unit can be exemplified by methyl (meth)acrylate, ethyl (meth)acrylate, n-propyl (meth)acrylate or isopropyl (meth)acrylate, and the like, and a suitable example is methyl acrylate.

The unit (2) may be included in the pressure-sensitive adhesive polymer in a ratio of about 30 to 65 parts by weight relative to 100 parts by weight of the unit (1). In another example, the ratio may be about 60 parts by weight or less, 58 parts by weight or less, 56 parts by weight or less, 54 parts by weight or less, 52 parts by weight or less, 50 parts by weight or less, 48 parts by weight or less, 46 parts by weight or less, 44 parts by weight or less, 42 parts by weight or less, 40 parts by weight or less, 38 parts by weight or less, 36 parts by weight or less, or 34 parts by weight or less.

As the unit (3), a unit of an aromatic group-containing monomer, for example, a unit of a (meth)acrylate-based monomer having an aromatic substituent is used. The kind of the aromatic group-containing monomer capable of forming such a unit is not particularly limited, and for example, a monomer of Formula 1 below can be exemplified.

[Formula 1]

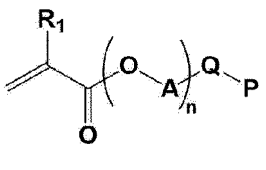

In Formula 1, $R_1$ is hydrogen or an alkyl group, A is an alkylene group, n is an integer in a range of 0 to 3, Q is a single bond, -O-, -S- or an alkylene group, and P is an aromatic substituent.

In Formula 1, a single bond means a case where the atomic groups on both sides are directly bonded to each other without mediating a separate atom. For example, in a structure represented by A-B-C, when B is a single bond, it may mean that there is no separate atom at the indicated site, and A and C are directly connected to form a structure represented by A-C.

In Formula 1, $R_1$ may be, for example, hydrogen or an alkyl group having 1 to 4 carbon atoms, or may be hydrogen, a methyl group or an ethyl group.

In the definition of Formula 1, A may be an alkylene group having 1 to 12 carbon atoms or 1 to 8 carbon atoms,

and may be, for example, a methylene group, an ethylene group, a hexylene group or an octylene group.

In Formula 1, n may be, for example, a number in the range of 0 to 2, or may be 0 or 1.

In Formula 1, Q may be a single bond, -O- or -S-.

In Formula 1, P is a substituent derived from an aromatic compound, which may be, for example, a functional group derived from an aromatic ring having 6 to 20 carbon atoms, for example, a phenyl group, a biphenyl group, a naphthyl group or an anthracenyl group.

In Formula 1, the aromatic substituent may be optionally substituted by one or more substituents, where a specific example of the substituent may include halogen or alkyl, or halogen or alkyl of 1 to 12 carbon atoms, or chlorine, bromine, methyl, ethyl, propyl, butyl, nonyl or dodecyl, but is not limited thereto.

A specific example of the compound of Formula 1 may include one or a mixture of two or more of phenoxyethyl (meth)acrylate, benzyl (meth)acrylate, 2-phenylthio-1-ethyl (meth)acrylate, 6-(4,6-dibromo-2-isopropylphenoxy)-1-hexyl (meth)acrylate, 6-(4,6-dibromo-2-sec-butylphenoxy)-1-hexyl (meth)acrylate, 2,6-dibromo-4-nonylphenyl (meth)acrylate, 2,6-dibromo-4-dodecylphenyl (meth)acrylate, 2-(1-naphthyloxy)-1-ethyl (meth)acrylate, 2-(2-naphthyloxy)-1-ethyl (meth)acrylate, 6-(1-naphthyloxy)-1-hexyl (meth)acrylate, 6-(2-naphthyloxy)-1-hexyl (meth)acrylate, 8-(1-naphthyloxy)-1-octyl (meth)acrylate and 8-(2-naphthyloxy)-1-octyl (meth)acrylate, and a suitable example is benzyl acrylate.

The unit (3) may be included in the polymer in a ratio of about 20 to 45 parts by weight relative to 100 parts by weight of the unit (1). In another example, the ratio may be about 40 parts by weight or less, about 35 parts by weight or less, or about 30 parts by weight or less.

As the unit (4), a unit of a monomer having a hydroxyl group is used. Such a unit may serve to impart cohesive force or the like through a reaction with a cross-linking agent or the like, which is described below, if necessary. As the monomer having a hydroxyl group, hydroxyalkyl (meth)acrylate having a hydroxyalkyl group having a carbon number in a range of 3 to 6 may be used for ensuring adequate high temperature reliability and the like.

The hydroxyalkyl (meth)acrylate having a hydroxyalkyl group having a carbon atom in the range of 3 to 6 can be exemplified by 3-hydroxypropyl (meth)acrylate, 4-hydroxybutyl (meth)acrylate or 6-hydroxyhexyl (meth)acrylate, and the like, and in one example, 4-hydroxybutyl (meth)acrylate can be used.

The unit (4) may be included in the polymer in a ratio of about 4 to 8 parts by weight relative to 100 parts by weight of the unit (1). In another example, the ratio may be about 4.5 parts by weight or more, or may be about 7.5 parts by weight or less, 7 parts by weight or less, 6.5 parts by weight or less, 6 parts by weight or less, 5.5 parts by weight or less, or 5 parts by weight or less. Under such a ratio, a crosslinked structure capable of ensuring desired physical properties can be realized, and a pressure-sensitive adhesive layer having excellent keying force (adhesiveness to a base material) can be secured.

The pressure-sensitive adhesive polymer may comprise units of other monomers in addition to the above-mentioned monomers, but it is necessary that the units containing an acidic polar functional group, especially, a carboxyl group, of polar functional groups are not included or are included in a small amount even if included. This is because the optical laminate is often used adjacent to electrodes such as ITO (indium tin oxide), where the acidic functional groups such as the carboxyl group contained in the pressure-sensitive adhesive layer may cause corrosion of the electrodes, and the like to adversely affect the performance of the device.

In one example, in the pressure-sensitive adhesive polymer, the ratio of the monomer unit containing an acidic functional group such as a carboxyl group may be 1 wt% or less, 0.8 wt% or less, 0.6 wt% or less, 0.4 wt% or less, 0.2 wt% or less, 0.1 wt% or less, or 0.05 wt% or less, or may be 0 wt%.

As the pressure-sensitive adhesive polymer contains the above-mentioned monomer units and, if necessary, the ratio thereof is adjusted, the pressure-sensitive adhesive layer can have stable durability at a high temperature, other physical properties required for the pressure-sensitive adhesive layer can also be stably maintained, excellent base material adhesiveness of the pressure-sensitive adhesive layer can be secured, and even in the case of being disposed adjacent to the electrode, corrosion of the relevant electrode or the like cannot be caused.

The pressure-sensitive adhesive polymer may further comprise other known units in addition to the above-mentioned units, if necessary.

The method of polymerizing such a pressure-sensitive adhesive polymer is not particularly limited, and a known polymerization method applying the above-mentioned monomers may be used.

The pressure-sensitive adhesive layer may further comprise a crosslinking agent, where the crosslinking agent may crosslink the pressure-sensitive adhesive polymer.

As the crosslinking agent, a known crosslinking agent may be used, and for example, an isocyanate crosslinking agent, and the like may be used.

As the isocyanate crosslinking agent, a diisocyanate compound such as tolylene diisocyanate, xylene diisocyanate, diphenylmethane diisocyanate, hexamethylene diisocyanate, isophorone diisocyanate, tetramethylxylene diisocyanate or naphthalene diisocyanate, or a reaction product of one or more of the diisocyanates with a polyol (e.g., trimethylol propane), and the like can be used.

The crosslinking agent can be used in a ratio of 0.001 parts by weight to 10 parts by weight relative to 100

parts by weight of the pressure-sensitive adhesive polymer, and under this ratio, it is possible to prevent a phenomenon such as interlayer peeling or lifting due to deterioration of durability and reliability, while appropriately maintaining cohesive force of the pressure-sensitive adhesive. In another example, the ratio may be about 0.005 parts by weight or more, 0.01 parts by weight or more, 0.05 parts by weight or more, or 0.1 parts by weight or more, and may be about 9 parts by weight or less, 8 parts by weight or less, 7 parts by weight or less, 6 parts by weight or less, 5 parts by weight or less, 4 parts by weight or less, 3 parts by weight or less, 2 parts by weight or less, or 1.5 parts by weight or less.

In one example, the pressure-sensitive adhesive layer may further contain an ionic compound. In addition, the ionic compound can make the pressure-sensitive adhesive layer have appropriate antistatic properties.

As the ionic compound, an inorganic salt or an ionic liquid may be used. In the present application, the term ionic liquid may mean an ionic compound present in a liquid state at room temperature. Here, the room temperature is a natural temperature without warming or cooling, which may mean a temperature of about 10°C to 30°C, about 15°C to 30°C, about 20°C to 30°C, about 25°C or about 23°C or so.

When an inorganic salt is applied as the ionic compound, as the inorganic salt, a salt containing an alkali metal cation or an alkaline earth metal cation can be used. Such a cation can be exemplified by one or two or more of a lithium ion ($Li^+$), a sodium ion ($Na^+$), a potassium ion ($K^+$), a rubidium ion ($Rb^+$), a cesium ion ($Cs^+$), a beryllium ion ($Be^{2+}$), a magnesium ion ($Mg^{2+}$), a calcium ion ($Ca^{2+}$), a strontium ion ($Sr^{2+}$) and a barium ion ($Ba^{2+}$), and the like, and for example, one or two or more of a lithium ion, a sodium ion, a potassium ion, a magnesium ion, a calcium ion and a barium ion or a lithium ion, in consideration of ionic stability and mobility, can be used.

On the other hand, as the ionic liquid, a compound having an onium salt including nitrogen, sulfur or phosphorus as a cation component can be used. Such a cation can be exemplified by a quaternary ammonium compound such as N-ethyl-N,N-dimethyl-N-propylammonium, N,N,N-trimethyl-N-propylammonium, N-methyl-N,N,N-tributylammonium, N-ethyl-N,N,N-tributylammonium, N-methyl-N,N,N-trihexylammonium, N-ethyl-N,N,N-trihexylammonium, N-methyl-N,N,N-trioctylammonium or N-ethyl-N,N,N-trioctylammonium, phosphonium or a derivative thereof such as tetraalkylphosphonium, pyridinium or a derivative thereof, tetrahydropyridinium or a derivative thereof, dihydropyridinium or a derivative thereof, imidazolium or a derivative thereof, a compound containing a pyrroline skeleton or a derivative thereof, a compound containing a pyrrole skeleton or a derivative thereof, imidazolinium or a derivative thereof such as 1-ethyl-3-methylimidazolinium, pyrazolinium or a derivative thereof, trialkylsulfonium or a derivative thereof, pyrrolidinium or a derivative thereof such as 1-methyl-1-propylpyrrolidinium or a derivative thereof, or piperidinum or a derivative thereof such as 1-methyl-1-propyl piperidinium, and the like. In the present application, a compound containing a cation in which an alkyl group contained in the cation is substituted with an alkoxy group, a hydroxyl group, an alkynyl group or an epoxy group, and the like, among the above-mentioned cations, may also be used.

In one example, as the cation of the ionic liquid, a cation represented by Formula A below may be applied.

[Formula A]

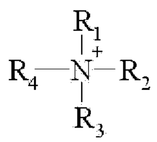

In Formula A, $R_1$ to $R_4$ each independently represent hydrogen, alkyl, alkoxy, alkenyl or alkynyl.

In Formula A, the alkyl or alkoxy may be alkyl or alkoxy having 1 to 20 carbon atoms, 1 to 12 carbon atoms, 1 to 8 carbon atoms or 1 to 4 carbon atoms. In addition, the alkyl or alkoxy may be linear, branched or cyclic alkyl or alkoxy, which may optionally be substituted by one or more substituents.

In Formula A, the alkenyl or alkynyl may be alkenyl or alkynyl having 2 to 20 carbon atoms, 2 to 12 carbon atoms, 2 to 8 carbon atoms or 2 to 4 carbon atoms. In addition, the alkenyl or alkynyl may be linear, branched or cyclic alkenyl or alkynyl, which may be optionally substituted by one or more substituents.

In the definitions of Formula A, when the alkyl, alkoxy, alkenyl or alkynyl is substituted with one or more substituents, an example of the substituent may include hydroxy, alkyl, alkoxy, alkenyl, alkynyl, cyano, thiol, amino, aryl or heteroaryl, and the like, but is not limited thereto.

In one example, $R_1$ to $R_4$ of Formula A may be each independently alkyl, and for example, linear or branched alkyl having 1 to 12 carbon atoms. In Formula A, $R_1$ to $R_4$ each independently represent linear or branched alkyl having 1 to 12 carbon atoms, but $R_1$ to $R_4$ may not simultaneously correspond to alkyl having the same carbon number. In this case, the case where $R_1$ to $R_4$ are all alkyl groups having the same carbon number is excluded in the range of Formula A. When $R_1$ to $R_4$ are all alkyl having the same carbon number, the probability that the compound exists in a solid phase at room temperature can be increased.

In Formula A, $R_1$ may be alkyl having 1 to 3 carbon atoms, and $R_2$ to $R_4$ may be each independently alkyl

having 4 to 20 carbon atoms, 4 to 15 carbon atoms or 4 to 10 carbon atoms. By using such a cation, it is possible to provide a pressure-sensitive adhesive which has more excellent optical properties, pressure-sensitive adhesive properties, workability and antistatic properties, has increased adhesion to a substrate, and has a shorter time required for stabilization of physical properties such as curing.

The anion contained in the ionic compound may be exemplified by $PF_6^-$, $AsF^-$, $NO_2^-$, fluoride ($F^-$), chloride ($Cl^-$), bromide ($Br^-$), iodide ($I^-$), perchlorate ($ClO_4^-$), hydroxide ($OH^-$), carbonate ($CO_3^{2-}$), nitrate ($NO_3^-$), trifluoromethanesulfonate ($CF_3SO_3^-$), sulfonate ($SO_4^-$), hexafluorophosphate ($PF_6^-$), methylbenzenesulfonate ($CH_3(C_6H_4)SO_3^-$), p-toluenesulfonate ($CH_3C_6H_4SO_3^-$), tetraborate ($B_4O_7^{2-}$), carboxybenzenesulfonate ($COOH(C_6H_4)SO_3^-$), trifluoromethanesulfonate ($CF_3SO_2^-$), benzoate ($C_6H_5COO^-$), acetate ($CH_3COO^-$), trifluoroacetate ($CF_3COO^-$), tetrafluoroborate ($BF_4^-$), tetrabenzylborate ($B(C_6H_5)_4^-$) or trispentafluoroethyl trifluorophosphate ($P(C_2F_5)_3F_3^-$), and the like.

In another example, as the anion, an anion represented by Formula B or bifluorosulfonylimide, and the like, can also be used.

[Formula B] $[X(YO_mR_f)_n]^-$

In Formula B, X is a nitrogen atom or a carbon atom, Y is a carbon atom or a sulfur atom, $R_f$ is a perfluoroalkyl group, m is 1 or 2, and n is 2 or 3.

In Formula B, when Y is carbon, m may be 1; when Y is sulfur, m may be 2; when X is nitrogen, n may be 2; and when X is carbon, n may be 3.

The anion of Formula B or bis(fluorosulfonyl)imide exhibits high electronegativity due to the perfluoroalkyl group ($R_f$) or the fluorine group, and also contains a unique resonance structure to have hydrophobicity while forming a weak bond with the cation. Accordingly, the ionic compound can exhibit excellent compatibility with other components, such as a polymer, of the composition, as well as give high antistatic property even in a small amount.

$R_f$ in Formula B may be a perfluoroalkyl group having 1 to 20 carbon atoms, 1 to 12 carbon atoms, 1 to 8 carbon atoms or 1 to 4 carbon atoms, where the perfluoroalkyl group may have a linear, branched or cyclic structure. The anion of Formula B may be a sulfonylmethide-based, sulfonylimide-based, carbonylmethide-based or carbonylimide-based anion, and specifically, may be one or a mixture of two or more of tristrifluoromethanesulfonylmethide, bistrifluoromethanesulfonylimide, bisperfluorobutanesulfonylimide, bispentafluoroethanesulfonylimide, tristrifluoromethanecarbonylmethide, bisperfluorobutanesulfonylimide or bispentafluoroethanecarbonylimide, and the like.

The ionic compound may be present in the pressure-sensitive adhesive layer in a ratio of 0.01 to 15 parts by weight relative to 100 parts by weight of the pressure-sensitive adhesive polymer. Specifically, the ionic compound may be present in the pressure-sensitive adhesive layer in a ratio of 0.1 parts by weight or more, 0.5 parts by weight or more, 1 part by weight or more, or 1.5 parts by weight or more and may be present in a ratio of 10 parts by weight or less, 5 parts by weight or less, 2 parts by weight or less, or 1.5 parts by weight or less, relative to 100 parts by weight of the solid content of the pressure-sensitive adhesive polymer. Under such a ratio, while desired antistatic properties are ensured, other required properties such as adhesion with the optical film can be stably maintained.

The pressure-sensitive adhesive layer may further comprise other known additives as needed, in addition to the above-mentioned components. Such an additive can be exemplified by one or more selected from the group consisting of a coupling agent such as a silane coupling agent, an antistatic agent, a tackifier, an ultraviolet stabilizer, a crosslinking retarder, an antioxidant, a colorant, a reinforcing agent, a filler, a defoamer, a surfactant, a photopolymerizable compound such as a multifunctional acrylate and a plasticizer, but is not limited thereto.

The present application also relates to a display device comprising such an optical laminate. The device may comprise, for example, a display panel to which the optical laminate is attached via the above-mentioned pressure-sensitive adhesive layer. Here, the type of the display panel is not particularly limited, which may be, for example, a known LCD panel or OLED panel, and the like. Furthermore, the position or the like where the optical laminate is attached to the panel can also follow a known manner.

## Advantageous Effects

The present application relates to an optical laminate. The present application can provide an optical laminate that stable durability is secured even at a high temperature, particularly an ultra-high temperature of about 100°C or higher, adhesiveness to a base material is excellent due to excellent keying force, other physical properties required for the optical laminate are also excellent, and even in the case of being disposed adjacent to the electrode, corrosion of the relevant electrode or the like is not induced.

## Mode for Invention

Hereinafter, the present application will be specifically described by way of examples, but the scope of the

present application is not limited by the following examples.

### 1. Method of measuring peel force

The pressure-sensitive adhesive polarizing plates prepared in Examples or Comparative Examples were each cut to a width of 25mm and a height of 200mm to prepare a specimen, which was attached to a glass plate via the pressure-sensitive adhesive layer of the specimen. The peel force was measured while peeling off the pressure-sensitive adhesive polarizing plate at a peel angle of 90 degrees and a peel rate of 300 mm/min at an elapsed time of 1 hour after attachment of the specimen.

### 2. Method of measuring gel fraction

After holding each of the pressure-sensitive adhesive layers prepared in Examples or Comparative Examples at a constant temperature and humidity room (temperature: 23°C, relative humidity: 50%) for 7 days, 0.2 g (= A in gel fraction measurement equation) was collected. The collected pressure-sensitive adhesive layer was completely immersed in 50 mL of ethyl acetate, and then stored in a dark room at room temperature for 1 day. Subsequently, a portion (insoluble fraction) not dissolved in ethyl acetate was collected by filtering it through a 200 mesh (#200) stainless steel wire net and dried at a temperature of 150°C for a period of 30 minutes to measure the dry mass of the insoluble fraction (B in gel fraction measurement equation). Subsequently, the gel fraction (unit: %) was measured by substituting the measurement result into the following equation.

<Gel fraction measurement equation>

$$\text{Gel fraction} = B/A \times 100$$

A: mass of the pressure-sensitive adhesive (0.2 g)

B: dry mass of insoluble fraction (unit: g)

### 3. Method of measuring elastic modulus

The pressure-sensitive adhesive compositions prepared in Examples or Comparative Examples were each coated between two release films and aged for 7 days under a constant temperature and humidity condition (temperature: 23°C, relative humidity: 50%) to prepare a pressure-sensitive adhesive layer having a thickness of about 22 μm. Subsequently, the pressure-sensitive adhesive between the release films was cut to prepare a circumferential specimen of 8mm × 1mm (= diameter × thickness), and then using a dynamic rheometer (ARES, RDA, TA Instruments Inc.), the storage modulus at 23°C was measured while applying shear stress between parallel plates at a frequency of 1 Hz.

### 4. ITO corrosion test

The pressure-sensitive adhesive compositions prepared in Examples or Comparative Examples were each laminated on a TAC (triacetyl cellulose) film having a thickness of 40μm and aged for 7 days under a constant temperature and humidity condition (temperature: 23°C, relative humidity: 50%) to prepare a pressure-sensitive adhesive layer specimen. Then, a typical ITO (indium tin oxide) film was cut to have a width of about 50 mm or so and a height of about 30 mm or so to prepare an ITO film specimen. Subsequently, on the ITO film specimen, a silver paste was applied to both ends in the transverse direction at a width of 10 mm or so, respectively. Subsequently, the pressure-sensitive adhesive layer specimen was cut to have a width of about 40 mm or so and a height of about 30 mm or so, and the pressure-sensitive adhesive layer specimen was attached to the ends on the silver paste at an interval of 5 mm or so to prepare a sample. The prepared sample was stored for about 250 hours under a high temperature and humidity condition (temperature: 85°C, relative humidity: 85%), and the change rate of resistance was evaluated with a linear resistance meter (Hioki, 3244-60 card hitester) as compared with before initial introduction to determine whether or not the ITO was corroded.

### 5. High temperature durability (lifting, peeling and foaming evaluation)

The pressure-sensitive adhesive polarizing plates of Examples or Comparative Examples were each cut to have a width of about 140 mm or so and a height of about 90 mm or so to prepare a specimen, which was attached to a glass substrate at a pressure of 5 kg/cm$^2$. The attachment was performed in a clean room so that bubbles or foreign materials were not generated. Subsequently, the prepared sample was kept in an autoclave for 15 minutes under conditions of 50°C and 5 kg/cm$^2$.

The sample was held at a temperature of about 100°C for about 500 hours, and then durability was evaluated according to the following criteria.

<Evaluation criteria>

O: no bubbling and peeling occurred

Δ: bubbling and/or peeling occurred

X: severe bubbling and/or peeling occurred

### 6. Keying force evaluation

Keying force means a physical quantity reflecting adhesiveness between a pressure-sensitive adhesive layer and a base material.

For each sample after the pressure-sensitive adhesive layers prepared in Examples or Comparative Examples were each laminated on a polarizing plate and aged for 7 days under a constant temperature and humidity condition (temperature: 23°C, relative humidity: 50%), keying force was evaluated. After removing the release film of the pressure-sensitive adhesive layer from the sample, it was visually confirmed how much the pressure-sensitive adhesive layer was left on the polarizing plate and evaluated, when a pressure-sensitive adhesive tape with a width of about 50 mm from American Tape Co., Ltd. was attached to the pressure-sensitive adhesive layer of the sample and the pressure-sensitive adhesive tape was separated from the pressure-sensitive adhesive layer. The weaker the keying force, the more the pressure-sensitive adhesive layer is separated from the polarizing plate and transferred to the pressure-sensitive adhesive tape during the evaluation, whereby a large amount of vacancies are confirmed, which are parts of the pressure-sensitive adhesive layer where the pressure-sensitive adhesive does not remain on the polarizing plate. It can be seen that the keying force is weak when there are many vacancy parts as above.

<Evaluation criteria>

◎: vacancy having a diameter of 1 mm or more was not observed in the pressure-sensitive adhesive layer laminated on the polarizing plate as an adherend upon evaluation

○: 1 to 5 vacancies having a diameter of 1 mm or more were observed in the pressure-sensitive adhesive layer laminated on the polarizing plate as an adherend upon evaluation

Δ: more than 5 vacancies having a diameter of 1 mm or more were observed in the pressure-sensitive adhesive layer laminated on the polarizing plate as the adherend upon evaluation

X: the vacancy area in the pressure-sensitive adhesive layer laminated on the polarizing plate as an adherend upon evaluation was larger than the area of the remaining pressure-sensitive adhesive layer

### Preparation Example 1. Preparation of pressure-sensitive adhesive polymer (A)

n-Butyl acrylate (n-BA), benzyl acrylate (BzA), methyl acrylate (MA) and 4-hydroxybutyl acrylate (4-HBA) were introduced into an 1 L reactor equipped with a cooling device for nitrogen gas refluxing and easy temperature control in a weight ratio of 62:15:20:3 (n-BA: BzA: MA: 4-HBA) and 100 parts by weight of ethyl acetate (EAc) was introduced as a solvent. Subsequently, nitrogen gas was purged for 1 hour to remove oxygen, and then, 0.03 parts by weight of azobisisobutyronitrile (AIBN) diluted to a concentration of 50 wt% in ethyl acetate was introduced as a reaction initiator and reacted for 8 hours to prepare a copolymer (A) having a molecular weight (Mw) of about 1,800,000 g/mol or so.

### Preparation Example 2. Preparation of pressure-sensitive adhesive polymers B to G

Copolymers were prepared in the same manner as in Preparation Example 1, except that the compositions shown in Table 1 below were adopted.

[Table 1]

| | Preparation Example | | | | | | |
|---|---|---|---|---|---|---|---|
| | 1 | 2 | 3 | 4 | 5 | 6 | 7 |
| | A | B | C | D | E | F | G |
| n-BA | 62 | 84 | 64 | 63 | 84 | 64 | 81 |
| BzA | 15 | 15 | 15 | 15 | 15 | 15 | 15 |
| MA | 20 | | 20 | 20 | | 20 | |
| 4-HBA | 3 | 1 | 1 | 2 | | | |
| AA | | | | | 1 | 1 | 4 |
| Mw | 1,800,000 | 1,500,000 | 1,800,000 | 1,800,000 | 1,650,000 | 1,800,000 | 1,300,000 |
| Content unit: part by weight, n-BA: n-butyl acrylate, BzA: benzyl acrylate, MA: methyl acrylate, 4-HBA: 4-hydroxybutyl acrylate, AA: acrylic acid, Mw: weight average molecular weight | | | | | | | |

## Example 1

### Preparation of pressure-sensitive adhesive composition

To the copolymer (A) of Preparation Example 1, about 0.12 parts by weight of an isocyanate crosslinking agent (T-39M, Japan Soken Co., Ltd.), about 1.0 part by weight of an ionic liquid (FC-4400, 3M Co.) and about 0.23 parts by weight of a silane coupling agent (T-789J, Japan Soken Co., Ltd.) were combined, relative to 100 parts by weight of the solid content of the copolymer (A).

Subsequently, a di-n-butyltin dilaurate catalyst (C-700, Hannong Chemicals Inc.) diluted with ethyl acetate at a concentration of about 0.5 wt% or so was combined thereto in an amount of about 0.001 parts by weight relative to 100 parts by weight of the solid content of copolymer (A). Then, after acetyl acetone as a crosslinking retarder was further combined thereto in an amount of about 1 part by weight relative to 100 parts by weight of the solid content of the copolymer (A), the mixture was diluted to an appropriate concentration and uniformly mixed, and then coated on a release paper and dried to produce a uniform pressure-sensitive adhesive layer having a thickness of 22 μm.

### Production of polarizing plate

A polyvinyl alcohol (PVA) film (Japan Synthetic Co., M2004) having a thickness of about 30 μm was immersed in a dyeing solution at 30°C containing 0.05 wt% of iodine and 1.5 wt% of potassium iodide for 60 seconds to be subjected to dyeing. Subsequently, the dyed polyvinyl alcohol film was immersed in a crosslinking solution at 30°C containing 0.5 wt% of boron and 3.0 wt% of potassium iodide for 60 seconds to be subjected to crosslinking. Thereafter, the crosslinked polyvinyl alcohol film was stretched at a draw ratio of 5.5 times using a roll-to-roll stretching method. The stretched polyvinyl alcohol film was washed with water by immersing it in ion-exchanged water at 30°C for about 20 seconds and immersed in a solution at 30°C containing 1.5 wt% of zinc nitrate and 4.0 wt% of potassium iodide for about 10 seconds. Thereafter, the polyvinyl alcohol film was dried at a temperature of 80°C for 200 seconds to produce a polarizer having a thickness of about 13 μm. The potassium content in the produced polarizer was about 0.47 wt%, and the zinc content was about 0.17 wt%. Subsequently, a polarizing plate was produced by attaching a protective film of TAC (triacetyl cellulose) having a thickness of about 40 μm on both sides of the polarizer.

### Production of optical laminate (pressure-sensitive adhesive polarizing plate)

The polarizing plate was stuck and processed to one side of the prepared pressure-sensitive adhesive layer to produce a pressure-sensitive polarizing plate (optical laminate).

## Comparative Example 1

To the copolymer (B) of Preparation Example 2, about 0.08 parts by weight of an isocyanate crosslinking agent (T-39M, Japan Soken Co., Ltd.), about 1.0 part by weight of an ionic liquid (FC-4400, 3M Co.) and about 0.23 parts by

weight of a silane coupling agent (T-789J, Japan Soken Co., Ltd.) were combined, relative to 100 parts by weight of the solid content of the copolymer (B).

Subsequently, a pressure-sensitive adhesive polarizing plate was produced in the same manner as in Example 1, except that after a di-n-butyltin dilaurate catalyst (C-700, Hannong Chemicals Inc.) diluted with ethyl acetate at a concentration of about 0.5 wt% or so was combined thereto in an amount of about 0.006 parts by weight relative to 100 parts by weight of the solid content of copolymer (B), the mixture was diluted to an appropriate concentration and uniformly mixed, and then coated on a release paper and dried to produce a uniform pressure-sensitive adhesive layer having a thickness of 22 μm.

## Comparative Example 2

To the copolymer (C) of Preparation Example 3, about 0.08 parts by weight of an isocyanate crosslinking agent (T-39M, Japan Soken Co., Ltd.), about 1.0 part by weight of an ionic liquid (FC-4400, 3M Co.) and about 0.23 parts by weight of a silane coupling agent (T-789J, Japan Soken Co., Ltd.) were combined, relative to 100 parts by weight of the solid content of the copolymer (C).

Subsequently, a pressure-sensitive adhesive polarizing plate was produced in the same manner as in Example 1, except that after a di-n-butyltin dilaurate catalyst (C-700, Hannong Chemicals Inc.) diluted with ethyl acetate at a concentration of about 0.5 wt% or so was combined thereto in an amount of about 0.006 parts by weight relative to 100 parts by weight of the solid content of copolymer (C), the mixture was diluted to an appropriate concentration and uniformly mixed, and then coated on a release paper and dried to produce a uniform pressure-sensitive adhesive layer having a thickness of 22 μm.

## Comparative Example 3

A pressure-sensitive adhesive layer and a pressure-sensitive polarizing plate were produced in the same manner as in Comparative Example 2, except that the content of the isocyanate crosslinking agent (T-39M, Soken, Japan Soken Co., Ltd.) was changed to about 0.12 relative to 100 parts by weight of the solid content of the copolymer (C).

## Comparative Example 4

To the copolymer (D) of Preparation Example 4, about 0.12 parts by weight of an isocyanate crosslinking agent (T-39M, Japan Soken Co., Ltd.), about 1.0 part by weight of an ionic liquid (FC-4400, 3M Co.) and about 0.23 parts by weight of a silane coupling agent (T-789J, Japan Soken Co., Ltd.) were combined, relative to 100 parts by weight of the solid content of the copolymer (D).

Subsequently, a di-n-butyltin dilaurate catalyst (C-700, Hannong Chemicals Inc.) diluted with ethyl acetate at a concentration of about 0.5 wt% or so was combined thereto in an amount of about 0.001 parts by weight relative to 100 parts by weight of the solid content of copolymer (B). Then, a pressure-sensitive adhesive polarizing plate was produced in the same manner as in Example 1, except that after acetyl acetone as a crosslinking retarder was further combined thereto in an amount of about 1 part by weight relative to 100 parts by weight of the solid content of the copolymer (A), the mixture was diluted to an appropriate concentration and uniformly mixed, and then coated on a release paper and dried to produce a uniform pressure-sensitive adhesive layer having a thickness of 22 μm.

## Comparative Example 5

A pressure-sensitive adhesive polarizing plate was produced in the same manner as in Example 1, except that after about 1 part by weight of a toluene isocyanate crosslinking agent (T-706BB, Japan Soken Co., Ltd.), about 0.005 parts by weight of an epoxy crosslinking agent (T-743L, Japan Soken Co., Ltd.), about 1.5 parts by weight of an ionic liquid (FC-4400, 3M Co.) and about 0.1 parts by weight of a silane coupling agent (T-789J, Japan Soken Co., Ltd.) were combined to the copolymer (E) of Preparation Example 5, relative to 100 parts by weight of the solid content of the copolymer (E), the mixture was diluted to an appropriate concentration and uniformly mixed, and then coated on a release paper and dried to produce a uniform pressure-sensitive adhesive layer having a thickness of 22 μm.

## Comparative Example 6

A pressure-sensitive adhesive polarizing plate was produced in the same manner as in Example 1, except that after about 1 part by weight of a toluene isocyanate crosslinking agent (T-706BB, Japan Soken Co., Ltd.), about 0.005 parts by weight of an epoxy crosslinking agent (T-743L, Japan Soken Co., Ltd.), about 1.5 parts by weight of an ionic liquid (FC-4400, 3M Co.) and about 0.1 parts by weight of a silane coupling agent (T-789J, Japan Soken Co., Ltd.) were

combined to the copolymer (F) of Preparation Example 6, relative to 100 parts by weight of the solid content of the copolymer (F), the mixture was diluted to an appropriate concentration and uniformly mixed, and then coated on a release paper and dried to produce a uniform pressure-sensitive adhesive layer having a thickness of 22 μm.

## Comparative Example 7

A pressure-sensitive adhesive polarizing plate was produced in the same manner as in Example 1, except that after about 1.7 parts by weight of a toluene isocyanate crosslinking agent (T-706BB, Japan Soken Co., Ltd.), about 0.005 parts by weight of an epoxy crosslinking agent (T-743L, Japan Soken Co., Ltd.), about 0.7 parts by weight of an ionic liquid (HQ-115A, 3M Co.) and about 0.1 parts by weight of a silane coupling agent (T-789J, Japan Soken Co., Ltd.) were combined to the copolymer (G) of Preparation Example 7, relative to 100 parts by weight of the solid content of the copolymer (G), the mixture was diluted to an appropriate concentration and uniformly mixed, and then coated on a release paper and dried to produce a uniform pressure-sensitive adhesive layer having a thickness of 22 μm.

The evaluation results of Examples and Comparative Examples above were summarized and described in Table 2 below.

[Table 2]

| | Example | Comparative Example | | | | | | |
|---|---|---|---|---|---|---|---|---|
| | 1 | 1 | 2 | 3 | 4 | 5 | 6 | 7 |
| Peel force (gf/25mm) | 750 | 500 | 900 | 850 | 750 | 700 | 1000 | 900 |
| Gel fraction(wt%) | 83 | 72 | 76 | 82 | 83 | 76 | 80 | 80 |
| Elastic modulus (MPa) | 0.091 | 0.044 | 0.063 | 0.072 | 0.091 | 0.08 | 0.105 | 0.088 |
| High temperature durability | ○ | X | Δ | ○ | ○ | X | ○ | Δ |
| ITO corrosion (%) | 13 | 20 | 18 | 20 | 15 | 85 | 85 | 350 |
| Keying test | ◎ | ◎ | Δ | ○ | ○ | Δ | ○ | X |

### Claims

1. An optical laminate comprising an optical film; and a pressure-sensitive adhesive layer formed on one side of the optical film,
wherein the pressure-sensitive adhesive layer comprises a pressure-sensitive adhesive polymer having a first alkyl (meth)acrylate unit having an alkyl group with 4 or more carbon atoms, a second alkyl (meth)acrylate unit having an alkyl group with 3 or less carbon atoms, an aromatic group-containing monomer unit and a hydroxyl group-containing monomer unit, and
the pressure-sensitive adhesive polymer comprises the first alkyl (meth)acrylate unit in a ratio of 45 wt% to 70 wt%, and comprises 30 to 65 parts by weight of the second alkyl (meth)acrylate unit, 20 to 45 parts by weight of the aromatic group-containing monomer unit, and 4 to 8 parts by weight of the hydroxyl group-containing monomer unit, relative to 100 parts by weight of the first alkyl (meth) acrylate unit.

2. The optical laminate according to claim 1, wherein the pressure-sensitive adhesive layer has a storage modulus at room temperature of 0.07 MPa or more.

3. The optical laminate according to claim 1, wherein the pressure-sensitive adhesive layer has a gel fraction of 80 wt% or more according to Equation 1 below:

[Equation 1]

$$\text{Gel fraction} = B/A \times 100$$

wherein, A is the mass (unit: g) of the pressure-sensitive adhesive layer before immersing it in ethyl acetate, and B represents the dry mass (unit: g) of the insoluble fraction recovered after immersing the pressure-sensitive adhesive layer in ethyl acetate at room temperature for 24 hours.

4. The optical laminate according to claim 1, wherein the optical film is a polarizer.

5. The optical laminate according to claim 4, wherein the polarizer is a polyvinyl alcohol polarizer containing potassium and zinc.

6. The optical laminate according to claim 5, wherein the polyvinyl alcohol polarizer comprises potassium (K) and zinc (Zn) in a weight ratio (K/Zn) of 0.2 to 6.

7. The optical laminate according to claim 5, wherein the polyvinyl alcohol polarizer comprises potassium in a ratio of 0.1 to 2 wt%.

8. The optical laminate according to claim 5, wherein the polyvinyl alcohol polarizer comprises zinc in a ratio of 0.1 to 0.5 wt%.

9. The optical laminate according to claim 1, wherein the second alkyl (meth)acrylate unit is a methyl acrylate unit.

10. The optical laminate according to claim 1, wherein the aromatic group-containing monomer is represented by Formula 1 below:

[Formula 1]

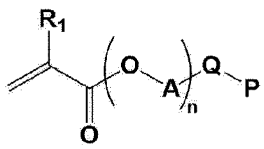

wherein, $R_1$ is hydrogen or an alkyl group, A is an alkylene group, n is an integer in a range of 0 to 3, Q is a single bond, -O-, -S- or an alkylene group, and P is an aromatic substituent.

11. The optical laminate according to claim 1, wherein the hydroxyl group-containing monomer unit is a hydroxyalkyl (meth)acrylate unit having a carbon number in a range of 3 to 6.

12. The optical laminate according to claim 1, wherein the ratio of carboxyl group-containing monomer units in the pressure-sensitive adhesive polymer is 1 wt% or less.

13. The optical laminate according to claim 1, wherein the pressure-sensitive adhesive layer further comprises a crosslinking agent for crosslinking the pressure-sensitive adhesive polymer.

14. A display device comprising a display panel to which the optical laminate of claim 1 is attached via the pressure-sensitive adhesive layer.

**INTERNATIONAL SEARCH REPORT**

International application No.
**PCT/KR2018/014692**

A. CLASSIFICATION OF SUBJECT MATTER

***C09J 7/20(2018.01)i, C09J 133/08(2006.01)i, C09J 133/10(2006.01)i, G02B 5/30(2006.01)i, C08L 29/04(2006.01)i, C08K 3/08(2006.01)i***

According to International Patent Classification (IPC) or to both national classification and IPC

B. FIELDS SEARCHED

Minimum documentation searched (classification system followed by classification symbols)
C09J 7/20; C08F 220/10; C08L 33/04; C09J 11/06; C09J 133/08; C09J 133/10; G02B 5/30; C08L 29/04; C08K 3/08

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal), STN (Registry, Caplus) & Keywords: optics, polarizer, high temperature, adhesive layer, alkyl group of more than four carbon atoms, alkyl group of less than three carbon atoms, (meth)acrylate, monomer containing aromatic group, monomer containing hydroxyl group

C. DOCUMENTS CONSIDERED TO BE RELEVANT

| Category* | Citation of document, with indication, where appropriate, of the relevant passages | Relevant to claim No. |
|---|---|---|
| X<br>Y | KR 10-2014-0142821 A (DONGWOO FINE-CHEM. CO., LTD.) 15 December 2014<br>See paragraphs [0008], [0060], [0070], [0073], [0077], [0082]. | 1-4,9-14<br>5-8 |
| Y | KR 10-2006-0048693 A (NITTO DENKO CORPORATION) 18 May 2006<br>See claim 1. | 5-8 |
| A | KR 10-2009-0078211 A (LG CHEM, LTD.) 17 July 2009<br>See table 1. | 1-14 |
| PX | KR 10-2018-0018311 A (SAMSUNG SDI CO., LTD.) 21 February 2018<br>See paragraphs [0232]-[0234]. | 1-4,9-14 |
| PX | KR 10-2018-0018300 A (SAMSUNG SDI CO., LTD.) 21 February 2018<br>See paragraphs [0186], [0187]. | 1-4,9-14 |
| PX | KR 10-2018-0068321 A (SAMSUNG SDI CO., LTD.) 21 June 2018<br>See paragraph [0232]. | 1-4,9-14 |
| PX | KR 10-2018-0121319 A (FUJIMORI KOGYO CO., LTD.) 07 November 2018<br>See paragraph [0075]. | 1-4,9-14 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 FEBRUARY 2019 (26.02.2019) | **26 FEBRUARY 2019 (26.02.2019)** |

| Name and mailing address of the ISA/KR | Authorized officer |
|---|---|
| Korean Intellectual Property Office<br>Government Complex Daejeon Building 4, 189, Cheongsa-ro, Seo-gu, Daejeon, 35208, Republic of Korea<br>Facsimile No. +82-42-481-8578 | Telephone No. |

Form PCT/ISA/210 (second sheet) (January 2015)

**INTERNATIONAL SEARCH REPORT**
Information on patent family members

International application No.
**PCT/KR2018/014692**

| Patent document cited in search report | Publication date | Patent family member | Publication date |
|---|---|---|---|
| KR 10-2014-0142821 A | 15/12/2014 | KR 10-1938897 B1 | 15/01/2019 |
| | | TW 201446814 A | 16/12/2014 |
| | | WO 2014-196766 A1 | 11/12/2014 |
| KR 10-2006-0048693 A | 18/05/2006 | CN 100445780 C | 24/12/2008 |
| | | CN 1715968 A | 04/01/2006 |
| | | JP 2006-047978 A | 16/02/2006 |
| | | TW 200600845 A | 01/01/2006 |
| | | US 2005-0285286 A1 | 29/12/2005 |
| KR 10-2009-0078211 A | 17/07/2009 | AT 546504 T | 15/03/2012 |
| | | CN 101910347 A | 08/12/2010 |
| | | CN 101910347 B | 06/02/2013 |
| | | EP 2233546 A2 | 29/09/2010 |
| | | EP 2233546 A4 | 15/12/2010 |
| | | EP 2233546 B1 | 22/02/2012 |
| | | JP 2011-510114 A | 31/03/2011 |
| | | JP 5421288 B2 | 19/02/2014 |
| | | KR 10-1019064 B1 | 07/03/2011 |
| | | TW 200936724 A | 01/09/2009 |
| | | TW I393757 B | 21/04/2013 |
| | | US 2011-0043737 A1 | 24/02/2011 |
| | | US 2014-0093662 A1 | 03/04/2014 |
| | | US 9482896 B2 | 01/11/2016 |
| | | US 9798185 B2 | 24/10/2017 |
| | | WO 2009-091162 A2 | 23/07/2009 |
| | | WO 2009-091162 A3 | 05/11/2009 |
| KR 10-2018-0018311 A | 21/02/2018 | JP 2018-024755 A | 15/02/2018 |
| KR 10-2018-0018300 A | 21/02/2018 | JP 2018-024830 A | 15/02/2018 |
| KR 10-2018-0068321 A | 21/06/2018 | JP 2018-095843 A | 21/06/2018 |
| KR 10-2018-0121319 A | 07/11/2018 | CN 108795339 A | 13/11/2018 |
| | | JP 2018-188524 A | 29/11/2018 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020170160493